# EUROPEAN PATENT APPLICATION

(11) **EP 2 842 979 A1**
(43) Date of publication of application: **04.03.2015**
(21) Application number: 13781481.0
(22) Date of filing: 24.04.2013
(51) Int. Cl.: C08G 18/48, C08G 18/00, C08G 101/00

(54) **POLYURETHANE FOAMING COMPOSITION AND METHOD FOR PRODUCING FLEXIBLE POLYURETHANE FOAM**

(30) Priority: 26.04.2012 JP 2012101410
(71) Applicant: Momentive Performance Materials Japan LLC, Tokyo 107-6112 (JP)
(72) Inventor: SOFUKU Hiroshi, Tokyo 107-6112 (JP); OGAWA Yuta, Tokyo 107-6112 (JP); NASA Toshihisa, Tokyo 107-6112 (JP)
(74) Representative: Granleese, Rhian Jane
(86) International application number: PCT/JP2013/062008
(87) International publication number: WO 2013/161854

(57) **Abstract**

An expandable polyurethane composition includes (A) polyisocyanate, (B) active hydrogen containing compound including (B1) polyol and (B2) water, a catalyst, and (C) cross-linking agent composition. The (C) cross-linking agent composition includes at least one kind of (C1) cross-linking agent selected from (CA) ethoxylate derivative having MW of 2000 or less and (CB) ester compound having MW of 2500 or less, and (C2) non-protic polar solvent, and a mass ratio ((a + b)/c) of a sum of content a of the (CA) ethoxylate derivative and content b of the (CB) ester compound relative to content c of the (C2) non-protic polar solvent is 1/10 to 10/1. A flexible polyurethane foam can be obtained of which wet set is improved and feeling is good.

## Description

### FIELD

The present invention relates to an expandable polyurethane composition and a manufacturing method of a flexible polyurethane foam, and particularly relates to a foam composition for forming a flexible polyurethane foam, in which a specific cross-linking agent composition is compounded by a specific ratio, and a manufacturing method of a flexible polyurethane foam using the foam composition.

### BACKGROUND

Due to their high cushioning property, flexible polyurethane foams are widely used for vehicle cushion materials, furniture mats, beddings, miscellaneous goods, and the like. The flexible polyurethane foams are generally manufactured by causing reaction of organic polyisocyanate with two or more compounds containing active hydrogen under existence of a catalyst, a surfactant, and other additives. As the active hydrogen containing compound, there are used polyols, polymer polyols obtained by radical polymerization of acrylonitrile and styrene in a polyol, primary and secondary polyamines, water, and the like.

Then, in manufacturing vehicle cushion sheet foams for example, a method is generally employed which mixes a starting material by a high-pressure foaming machine or the like, molds it by injecting into a mold, and thereafter forcibly interconnects foamed cells in the foam by using a compressor.

In such a manufacturing process, reduction of molding time, lowering energy, and so on are required, and thus speed of reaction and quickness of demolding are demanded. On the other hand, in a polyurethane foam to be manufactured, low density is demanded in view of manufacturing costs and advantage in handling of molded product. In particular, in a foam for vehicle, low density for weight reduction is demanded in view of fuel consumption improvement, and increase in good feeling represented by seating comfort is also desired.

Conventionally, compounding various additives in a composition for manufacturing a polyurethane foam has been proposed. For example, by causing a reaction with polyisocyanate and immediately increasing a molecular weight to improve stability of the foam, use of ethoxylate derivative or ester compound as a cross-linking agent is practiced. However, with a conventional composition, although a high-elasticity foam is obtained, improvement in feeling, such as seating comfort, touch, and the like, and durability has not been sufficient.

Further, as a technical problem demanded for furthering low density, maintenance of durability such as reduction in compression set (also referred to as compression set) is exemplified. For example, Reference 1 proposes a technique to improve durability by using a specific cross-linking agent composition. The method of Reference 1 can largely improve decrease in physical properties due to low density, but has not achieved improvement in feeling represented by seating comfort or the like.

Further, Reference 2 proposes a composition for manufacturing a polyurethane foam in which vulnerability of a foam surface is improved to thereby allow imparting adhesiveness without cross-linking at high temperature, by containing polyisocyanate, water, organic acid, and non-protic polar solvent. Reference 3 describes a manufacturing method of a polyurethane foam which is particularly excellent in anti-scorching by using cyclic lactone as a solvent. Moreover, Reference 4 and Reference 5 describe compounding of a specific solvent in order to improve adhesive property of a rigid polyurethane foam for a building insulation material.

However, all the compositions described in References 2 to 5 are a composition for manufacturing a rigid polyurethane foam. In case of using the compositions in References 2 to 5, it is not possible to obtain a flexible polyurethane foam which differs largely from the rigid polyurethane foam in structure of foams and characteristics. In particular, it has not been possible to obtain foams which are satisfactory in compression set and wet set as well as feeling such as stickiness and slipperiness.

### RELEVANT REFERECNES

### Patent References

Reference 1: JP-A 2010-280743
Reference 2: JP-A 2008-534740
Reference 3: US Patent No. 6541532
Reference 4: JP-A 2008-255235
Reference 5: JP-A 2005-272576

### DTSCLOSURE OF THE INVENTION

### Problems to be Solved by the Invention

The present invention has been made to solve such problems, and an object thereof is to provide an expandable polyurethane composition capable of providing a flexible polyurethane foam of which wet set is largely improved and feeling such as stickiness and slipperiness is good. Means for Solving the Problems

An expandable polyurethane composition of the present invention includes:
(A) polyisocyanate;
(B) active hydrogen containing compound including (B1) polyol and (B2) water;
   a catalyst; and
(C) cross-linking agent composition of 0.1 to 20 parts by mass relative to 100 parts by mass of the (B1) polyol,
in which the (C) cross-linking agent composition includes at least one kind of (C1) cross-linking agent selected from (CA) ethoxylate derivative and (CB) ester compound, and (C2) non-protic polar solvent,
the (CA) ethoxylate derivative having a mass average molecular weight of 2000 or less represented by

formula (1): HO(CH₂CH₂O)ₘH

(in the formula (1), m is an integer of 3 to 30) or

formula (2): R¹-[(CH₂CH₂O)ₙH]ₓ

the (CB) ester compound having a mass average molecular weight of 2500 or less represented by

formula (3): H(OR²OCOR³CO)_{y}-OR²OH,

or

formula (4): R⁴-[(OCOR³CO-OR²)_{y}-OH]₃

(in the formula (3) and formula (4), R² represents an alkyl group of which carbon number is 2 to 10, R³ represents an alkyl group of which carbon number is 1 to 15, and y is an integer of 1 to 14, and in the formula (4), R⁴ represents an alkyl group of which carbon number is 1 to 15); and
in which in the (C) cross-linking agent composition, a mass ratio ((a + b)/c) of a sum of content (a) of the (CA) ethoxylate derivative and content (b) of the (CB) ester compound relative to content (c) of the (C2) non-protic polar solvent is 1/10 to 10/1.

Further, a manufacturing method of a flexible polyurethane foam of the present invention includes using the above-stated expandable polyurethane composition.

According to the expandable polyurethane composition of the present invention, a flexible polyurethane foam can be obtained with good manufacturing efficiency of which compression set, particularly wet set, is improved more than ever before and feeling such as touch (stickiness and slipperiness) is good.

### DETAILED DESCRIPTION

Embodiments of the present invention are described. Note that the present invention is not limited to the following embodiments.

An expandable polyurethane composition in an embodiment of the present invention includes (A) polyisocyanate, (B) active hydrogen containing compound including (B1) polyol and (B2) water, a catalyst, and (C) cross-linking agent composition. Hereinafter, each component in the embodiment of the present invention is described.

### [(A) Polyisocyanate]

As polyisocyanate which is the (A) component, an organic isocyanate compound in publicly known aliphatic series, alicyclic series and aromatic series having two or more isocyanate groups can be used. Examples thereof include alkylene diisocyanates or arylene disocyanate such as hexamethylene diisocyanate, isophorone diisocyanate, 4,4-dicyclohexylmethane diisocyanate, 2,4- or 2,6-tolylene diisocyanate (also referred to as toluene diisocyanate or toluidine diisocyanate: TDI), 2,2'- or 2,4'- or 4,4'-diphenylmethane diisocyanate (MDI), publicly known triisocyanate and polymeric MDI (referred to as crude diphenylmethane diisocyanate; crude MDI).

Preferred isocyanates to obtain a flexible foam are a mixture of 2,4-TDI of 80 mass% and 2,6-TDI of 20 mass%, a mixture of 2,4-TDI of 65 mass% and 2,6-TDI of 35 mass%, all of the polyisocyanates in MDI type, and a mixture of the above-stated TDI and MDI. Preferably, the (A) polyisocyanate comprises 2,4- TDI and/or 2,6- TDI, of which content rate to the (A) polyisocyanate is 10 mass% or more.

The amount of polyisocyanate used for manufacturing a foam is described as "Isocyanate Index". The "Isocyanate Index" indicates the percentage of an isocyanate group relative to an active hydrogen containing group capable of reacting with the isocyanate group, and can be obtained by dividing the actual amount of polyisocyanate used in a reaction mixture by a theoretically required stoichiometric amount of the polyisocyanate necessary to react with all of the active hydrogen, and centuplicating the result. In the embodiment of the present invention, the isocyanate index is not particularly limited, but generally, the manufacturing of the flexible foam is within a range of 70 to 130.

### [(B) Active hydrogen containing compound]

The active hydrogen containing compound which is the (B) component includes (B1) polyol and (B2) water.

(B1) polyol is a compound having in a molecule two or more active hydrogen containing functional groups, such as a hydroxyl group, which can react with the isocyanate group in the (A) component, and a publicly known one can be used. The preferred number of the active hydrogen containing functional groups (hydroxyl groups) of the polyol is 2 to 8, and the most preferable number is 2.3 to 6. When the number of the hydroxyl groups is two or more, durability of the flexible polyurethane foam becomes good. When the average number of hydroxyl groups is 6 or less, the flexible polyurethane foam does not become too hard, and mechanical physical properties such as elongation become good.

As the compound having two or more hydroxyl groups, there are polyether based polyols, polyester based polyols, and the like. In particular, one which is composed of only one or more polyether based polyols, or one of which main component is the polyether based polyol and the polyester based polyol, a polyhydric alcohol, a polyamine, an alkanolamine, the other active hydrogen containing compounds are used in combination is preferred.

The polyol which can be used in the embodiment of the present invention is not particularly limited, but it is preferred to use the one classified the followings independently or by mixture.
1) alkylene oxide adduct of polyhydroxy alkane
2) alkylene oxide adduct of nonreducing sugar and sugar derivative
3) alkylene oxide adduct of phosphoric acid and polyphosphoric acid
4) alkylene oxide adduct of polyphenols
5) alkylene oxide adduct of primary and secondary amine

The alkylene oxide adduct of polyhydroxy alkane suitable for obtaining the flexible foam is an ethylene oxide adduct of trihydroxy alkane, and a propylene oxide adduct of trihydroxy alkane.

A grafted polyol or polymer polyol is one kind of polyol useful for the embodiment of the present invention, and can be used in a wide range in manufacturing of the flexible foam. The polymer polyol is, for example, a polyol containing a stable dispersion substance of polymer (for example, fine particles of vinyl polymer) in the polyol among the above-stated polyols 1) to 5), more preferably the polyol 1).

In the embodiment, as (B1) polyol, preferably, one having a hydroxyl group value of 10 to 120 mgKOH/g is used. By having the hydroxyl group value of 10 mgKOH/g or more, the viscosity of the polyol does not become high, and workability during manufacturing becomes good. Further, by having the hydroxyl group value of 120 mgKOH/g or less, the durability of the flexible polyurethane foam becomes good. Preferably, the hydroxyl group value of the polyol is selected according to usage of the polyurethane foam.

As a commercial product of the polyol which is the (B1) component, for example, there are SANNIX FA-703 (glycerin-propylene oxide/ethylene oxide adduct, hydroxyl group value of 33 mgKOH/g; manufactured by Sanyo Chemical Industries, Ltd.), SANNIX FA-728R (polymer polyol, hydroxyl group value of 28.5 mgKOH/g; manufactured by Sanyo Chemical Industries, Ltd.), ACTCOL PPG EP-901 (glycerin-propylene oxide/ethylene oxide adduct, hydroxyl group value of 24 mgKOH/g; manufactured by Mitsui Chemicals, Inc.), ACTCOL POP-36/90 (polymer polyol, hydroxyl group value of 24 mgKOH/g; manufactured by Mitsui Chemicals, Inc.), Adeka polyol AM-302 (glycerin-propylene oxide/ethylene oxide adduct, hydroxyl group value of 57.6 mgKOH/g; manufactured by Adeka Corporation), and the like.

The water which is the (B2) component is compounded as a chemical blowing agent which forms foams by carbon dioxide gas generated by reaction with the isocyanate group in polyisocyanate which is the (A) component. At least 50 % of the gas volume forming the foams (that is, at least 50 volume% of the total foaming gas) is preferably carbon dioxide generated by the reaction of water which is the (B2) component and the isocyanate group of (A) polyisocyanate, and in particular, more preferably, water is used solely as the blowing agent and 100% of the foaming gas volume is the carbon dioxide generated by the reaction of water and the isocyanate group. Specifically, although a physical blowing agent and a chemical blowing agent being an organic acid such as a formic acid can be concomitantly used in addition to water as the chemical blowing agent, more preferably, the water is used solely for foaming.

### [Catalyst]

The catalyst accelerates the reaction of the isocyanate group in the polyisocyanate which is the (A) component with the active hydrogen containing group in the active hydrogen containing compound which is the (B) component, and can be called a gelling catalyst. As such a catalyst, for example, tertiary amines such as triethylenediamine, bis[(2-dimethylamino)ethyl] ether, N,N,N,N-tetramethyl hexamethylene diamine, carboxylic acid metal salt such as potassium acetate, 2-ethylhexanoic acid potassium, organotin compound such as dibutyltindilaulate, stannousoctoate, and the like can be used. The compounding amount of the catalysts is an amount generally used for facilitating the reaction. Further, in the present invention, a catalyst (blow catalyst) which facilitates the reaction of the (B2) water and the isocyanate group of the polyisocyanate which is the (A) component can also be compounded.

### [(C) Cross-linking agent composition]

The (C) cross-linking agent composition includes one kind or more of (C1) cross-linking agent selected from (CA) ethoxylate derivative having a mass average molecular weight of 2000 or less and (CB) ester compound having a mass average molecular weight of 2500 or less, and (C2) non-protic polar solvent. Then, a ratio (mass ratio) of content of the (C1) cross-linking agent relative to the content of the (C2) non-protic polar solvent in the (C) cross-linking agent composition is 1/10 to 10/1. Specifically, when the content (mass) of (CA) ethoxylate derivative is a, the content (mass) of (CB) ester compound is b, and the content (mass) of (C3) non-protic polar solvent is c, (a + b)/C = 1/10 to 10/1.

### <(CA) Ethoxylate derivative>

The (CA) ethoxylate derivative constituting the (C1) cross-linking agent is also called an ethylene oxide derivative, and is represented by

formula (1): HO(CH₂CH₂O)ₘH,

or

formula (2): R¹-[(CH₂CH₂O)ₙH]ₓ,

and has a mass average molecular weight (Mw) of 2000 or less. The mass average molecular weight (Mw) is preferably 1200 or less.

In the formula (1), m is an integer of 3 to 30. Preferably, m is an integer of 5 to 25. Further, in the formula (2), R¹ is a group selected from a glycerol group, a trimethylol group, a pentaerythritol group, and a diglycerol group. Preferably, R¹ is a glycerol group. n is an integer of 1 to 15, and x is 3 or 4. Preferably, n is an integer of 2 to 8, and preferably x is 3.

Specifically, preferred examples of the ethoxylate derivative which is the (CA) component include polyoxyethylene glyceryl ether, polyethylene glycol, polyoxyethylene trimethylol ether, polyoxyethylene pentaerythritol ether, polyoxyethylene diglycerol ether, and the like.

### <(CB) Ester compound>

The (CB) ester compound constituting the (C1) cross-linking agent is represented by

formula (3): H(OR²OCOR³CO)_{y}-OR²OH,

or

formula (4): R⁴-[(OCOR³CO-OR²)_{y}-OH]₃,

and has a mass average molecular weight (Mw) of 2500 or less. The mass average molecular weight (Mw) is preferably 1200 or less.

In formula (3) and formula (4), R² is an alkyl group of which carbon number is 2 to 10. As R², a 3-methyl-1, 5-pentyl group, an isopropyl group, a diethylene ether group, and the like are exemplified, and the 3-methyl-1,5-pentyl group is preferred. R³ is an alkyl group of which carbon number is 1 to 15. As R³, a butylene group, a diethylene group, a hexylene group, and the like are exemplified, and the butylene group is preferred, y is an integer of 1 to 14. Preferably, y is 1 to 9.

Specifically, a preferred example of the (CB) ester compound is 3-methyl-1,5-pentanediol adipate represented by

formula: H-[O(CH₂CH₂CH(CH₃)CH₂CH₂-O-CO-CH₂CH₂CH₂CH₂CO)]_{y}-O-CH₂CH₂CH(CH₃)CH₂CH₂-OH

or

formula: R⁴-[(OCOCH₂CH₂CH₂CH₂CO-OCH₂CH₂CH(CH₃)CH₂CH₂)_{y}-OH]₃

(in the formula, R⁴ is an alkyl group such as a group represented by the following formula, and y is an integer of 1 to 9).

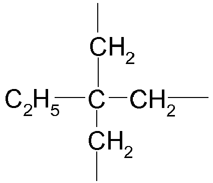

As the (C1) cross-linking agent constituting the (C) cross-linking composition, one kind can be used solely or two or more kinds can be used together out of the above-stated (CA) ethoxylate derivative and the (CB) ester compound.

### <(C2) Non-protic polar solvent>

As the (C2) non-protic polar solvent constituting the (C) cross-linking composition, dialkyl sulfoxide, N,N-dialkyl alkanoamide, 1-methyl-2-pyrrolidone, organic carbonate, cyclic ester, and the like are exemplified.

Note that in this specification, the "non-protic polar solvent" is used as ordinary meaning. Specifically, the non-protic polar solvent refers to a polar organic solvent which cannot be a supply source of active substituted hydrogen atom or atomic group preferred for forming strong hydrogen bonding with an arbitrary chemical species.

As the dialkyl sulfoxide, dimethyl sulfoxide, diethyl sulfoxide, diisobutyl sulfoxide, and the like are exemplified.

As the N,N-dialkyl alkanoamide, N,N-dimethylformamide, N,N-dimethylacetamide, N,N-diethylacetamide, and the like are exemplified.

As the organic carbonate, dimethyl carbonate, ethylene carbonate, propylene carbonate, and the like are exemplified.

As the cyclic ester, γ-butyrolactone, ε-caprolactone, γ-valerolactone, and the like are exemplified.

As the (C2) non-protic polar solvent, one kind selected from the above-stated compound group is used solely or two or more kinds thereof are used in mixture.

In the present invention, the mass ratio of the content of the (C1) cross-linking agent relative to the content of the (C2) non-protic polar solvent in the (C) cross-linking agent composition, that is, the mass ratio ((a + b)/c) of the sum of the content a of the (CA) ethoxylate derivative and the content b of the (CB) ester compound relative to the content c of the (C2) non-protic polar solvent is in the range of 1/10 to 10/1.

When (a + b)/c is less than 1/10, durability is insufficient. When (a + b)/c is more than 10/1, good feeling, namely, satisfactory touch and improvement in seating comfort cannot be obtained.

In the embodiment of the present invention, the compounding rate of such (C) cross-linking agent composition is 0.01 to 20 parts by mass relative to 100 parts by mass of the polyol which is the (B1) component. A range of 0.1 to 10 parts by mass is more preferred. When the compounding ratio of the (C) cross-linking agent composition is less than 0.01 part by mass, it is not possible to sufficiently improve the wet set of the foam and to increase the effect of suppressing the viscosity increase of the composition. Further, when the compounding ratio exceeds 20 parts by mass, decrease in other physical properties occurs, which is hence not preferred.

The foam composition in the embodiment of the present invention is obtained by mixing the (A) to (C) components and the catalyst with a high-speed mixer or the like.

In the foam composition of the embodiment, a surfactant can be compounded in addition to the (A) to (C) components and the catalyst. Additives such as a filler, a stabilizer, a coloring agent, a flame retardant, and the like can be further compounded as necessary. The foam adjusting agent is a surfactant compounded for forming good foams. As the surfactant, any agent can be used as long as it is publicly known as a surfactant in polyurethane industries. For example, there are a silicone based surfactant and a fluorine-containing compound based surfactant.

By using such an expandable polyurethane composition of the present invention, a flexible polyurethane foam can be manufactured by one-shot foaming method. Note that the "one-shot foaming method" is a method of manufacturing a polyurethane foam in one stage. In this method, all of the components needed for manufacturing the polyurethane foam including the polyisocyanate, the polyol, the water, the cross-linking agent, the catalyst, the surfactant, an arbitrary selective blowing agent, and so on are simply blended together, the resultant is foamed on a moving conveyor or by pouring into a mold of appropriate form, and then cured.

The foam which can be obtained from the expandable polyurethane composition of the present invention preferably has density of 14 kg/m³ or more from the point of obtaining a high resilience characteristic, and the like. Further, the foam preferably has density of 80 kg/m³ or less from the points of feeling such as seating comfort, riding comfort, touch, and so on and costs.

With the expandable polyurethane composition in the embodiment of the present invention, in the manufacturing of the polyurethanes, preferably the one-shot polyurethanes, particularly the flexible polyurethane foams, manufacturing efficiency can be improved largely by using a specific cross-linking agent composition, to thereby obtain the flexible polyurethane foam with good physical properties. More specifically, the flexible polyurethane foam in which compression set or wet set is improved, and which has good stickiness and slipperiness and excels in feeling such as touch can be obtained. The obtained flexible polyurethane foam is preferred for vehicle seats, furniture cushions, bedding mattresses, and the like as a high-repulsion polyurethane foam.

### EXAMPLES

Specific examples of the present invention will be described below.

### Examples 1 to 10, Comparative examples 1 to 9

(A) polyisocyanate, (B1) polyol, (B2) water, cross-linking agent-1 to cross-linking agent-5, polar solvent-6, polar solvent-7, cross-linking agent-9, and cross-linking agent-10 which are the (C) component, the catalyst and the surfactant were compounded by the compositions (parts by mass) presented in Table 1 and Table 2 and mixed by a high-speed mixer. After mixing, the obtained mixture was poured immediately into a wooden mold (internal dimensions 200 x 200 x 200 mm) in which a release paper is laid.

CORONATE T-80 (blended isocyanate composed of 2,4-TDI of 80 mass% and 2,6-TDI of 20 mass%: manufactured by Nippon Polyurethane Industries Co., LTD) was used as (A) polyisocyanate, Adeka Polyol AM-302 (hydroxyl group value 57.6 mgKOH/g; manufactured by Adeka Corporation) was used as (B1) polyether polyol, Niax catalyst A-1 (amine based blow catalyst: manufactured by Momentive Performance Materials Japan LLC) and Niax catalyst D-19 (2-ethylhexanoic acid tin which is gelling catalyst: manufactured by Momentive Performance Materials Japan LLC) were used as the catalyst, NIAX silicone L-595 was used as the surfactant-1, NIAX silicone L-598 was used as the surfactant-2, and NIAX silicone L-3642J was used as the surfactant-3 (all of which are silicone based surfactants manufactured by Momentive Performance Materials Japan LLC).

Note that as described above, the blow catalyst is a catalyst which facilitates the reaction of (B2) water and the isocyanate group in (A) polyisocyanate, and the gelling catalyst is a catalyst which facilitates the reaction of the isocyanate group in (A) polyisocyanate and the active hydrogen containing group in (B) active hydrogen containing compound.

Further, as the (C) cross-linking agent-1 to cross-linking agent-5, polar solvent-6, polar solvent-7, cross-linking agent-9, and cross-linking agent-10, ones described below were used.

### - Cross-linking agent-1

A cross-linking agent composition made by mixing polyoxyethylene glyceryl ether (Mw = 990) (UCON TPEG-990: manufactured by Dow Chemical Company) and propylene carbonate (manufactured by Lyondel) with a mass ratio of 20/80.

### - Cross-linking agent-2

A cross-linking agent composition made by mixing polyoxyethylene glyceryl ether (Mw = 990) (UCON TPEG-990: manufactured by Dow Chemical Company) and γ-butyrolactone (manufactured by Wako Pure Chemical Industries, Ltd.) with a mass ratio of 20/80.

### - Cross-linking agent-3

A cross-linking agent composition made by mixing 3-methyl-1,5-pentanediol adipate (Mw = 1000) (Kuraray Polyol P-1010: manufactured by Kuraray) and propylene carbonate (manufactured by Lyondel) with a mass ratio of 20/80.

### - Cross-linking agent-4

3-methyl-1,5-pentanediol adipate (Mw = 1000) (Kuraray Polyol P-1010: manufactured by Kuraray).

### - Cross-linking agent-5

Polyoxyethylene glyceryl ether (Mw = 990) (UCON TPEG-990: manufactured by Dow Chemical Company).

### - Polar solvent-6

Propylene carbonate (manufactured by Lyondel).

### - Polar solvent-7

γ-butyrolactone (manufactured by Wako Pure Chemical Industries, Ltd.).

### - Cross-linking agent-9

A cross-linking agent composition made by mixing polyoxyethylene glyceryl ether (Mw = 990) (UCON TPEG-990: manufactured by Dow Chemical Company), 3-methyl-1,5-pentanediol adipate (Mw = 1000) (Kuraray Polyol P-1010: manufactured by Kuraray), and propylene carbonate (manufactured by Lyondel) with a mass ratio of 10/10/80.

### - Cross-linking agent-10

A cross-linking agent composition made by mixing polyoxyethylene glyceryl ether (Mw = 990) (UCON TPEG-990: manufactured by Dow Chemical Company), 3-methyl-1,5-pentanediol adipate (Mw = 1000) (Kuraray Polyol P-1010: manufactured by Kuraray), and γ-butyrolactone (manufactured by Wako Pure Chemical Industries, Ltd.) with a mass ratio of 10/10/80.

Cream time and rise time of the obtained composition were measured as described below.

### [Cream time]

A time (seconds) from start of mixing liquid until the reaction mixture liquid becomes turbid like cream and rise was observed.

### [Rise time]

A time (seconds) from start of mixing liquid until the reaction mixture liquid foams and reaches a maximum height was measured.

The composition poured into the wooden mold was foamed and molded by retaining as it is for three minutes at room temperature (23°C ± 2°C). Thereafter, the foam was taken out together with the release paper from the wooden mold, cross-linked by heating for ten minutes in an oven at 120°C, and then cooled to the room temperature to obtain a polyurethane foam.

Next, the density of the polyurethane foam obtained thus was measured as described below. Further, the characteristics of the polyurethane foam were measured as described below in accordance with JIS K 6401. Measurement results are presented in the lower fields of Table 1 and Table 2.

### [Density]

The obtained polyurethane foam was cut out by 10 cm x 10 cm x 10 cm, and thereafter the density was measured.

### [Hardness]

It was measured in accordance with the measurement of hardness of JIS K6401-2: 2004 (IS02439: 1997). A compression board with a size of 314 cm² was used, and hardness (25% hardness) when compressed by 25%, hardness (40% hardness) when compressed by 40%, and hardness (65% hardness) when compressed by 65% were measured.

### [Compression set]

It was measured in accordance with JIS K6400-4:2004 (ISO1856: 2000). Specifically, a test piece with a length of one side of 50 ± 1 mm and a thickness of 25 ± 1 mm was let stand for 22 hours at a temperature of 70 ± 1°C in a state of being compressed by 50% in a thickness direction. Thereafter, the test piece was removed from a compression jig, let stand for 30 minutes at room temperature to allow recovery, and then its thickness was measured. The compression set was obtained thus.

### [Wet heat compression set]

A wet heat aging test was performed in accordance with JIS K6400-4:2004 (ISO1856: 2000), and the compression set (%) was measured. Specifically, a test piece with a length of one side of 50 ± 1 mm and a thickness of 25 ± 1 mm was let stand for 22 hours at 70 ± 1°C under 95% RH in a state of being compressed by 50% in a thickness direction. Thereafter, the test piece was removed from a compression jig, let stand for 30 minutes at room temperature to allow recovery, and then its thickness was measured. The wet heat compression set was obtained thus.

### [Air permeability]

In accordance with JIS K6400-7:2004 B method (ISO7231: 1984), the air permeability (L/min.) was measured by using a test piece with a length of one side of 51.0 ± 0.3 mm and a thickness of 25.0 ± 0.3 mm and measuring a necessary air flow rate for maintaining a pressure difference between the front and back of the test piece.

**[Table 1]**

| | | | E1 | E2 | E3 | E4 | E5 | E6 | E7 | E8 | E9 | E10 |
|---|---|---|---|---|---|---|---|---|---|---|---|---|
| Composition | (Parts by mass) | (B1) Polyol | 100 | 100 | 100 | 100 | 100 | 100 | 100 | 100 | 100 | 100 |
| | | (B2) Water | 3.60 | 3.60 | 3.60 | 3.60 | 3.60 | 3.60 | 3.60 | 3.60 | 3.60 | 3.60 |
| | | Amine based blow catalyst | 0.08 | 0.08 | 0.08 | 0.08 | 0.08 | 0.08 | 0.08 | 0.08 | 0.08 | 0.08 |
| | | 2-ethylhexanoic acid tin catalyst | 0.10 | 0.12 | 0.10 | 0.14 | 0.10 | 0.13 | 0.10 | 0.10 | 0.10 | 0.10 |
| | | Silicone surfactant-1 | 0.90 | 0.90 | 0.90 | 0.90 | 0.90 | 0.90 | 0.90 | 0.90 | 0.90 | 0.90 |
| | | (C) Cross-linking agent-1 | 1.00 | 3.00 | | | | | | | | |
| | | (C) Cross-linking agent-2 | | | 1.00 | 3.00 | | | | | | |
| | | (C) Cross-linking agent-3 | | | | | 1.00 | 3.00 | | | | |
| | | (C) Cross-linking agent-9 | | | | | | | 1.00 | 3.00 | | |
| | | (C) Cross-linking agent-10 | | | | | | | | | 1.00 | 3.00 |
| | | (C) Cross-linking agent-4 | | | | | | | | | | |
| | | (C) Cross-linking agent-5 | | | | | | | | | | |
| | | (C) Polar solvent-6 | | | | | | | | | | |
| | | (C) Polar solvent-7 | | | | | | | | | | |
| | (A) Polyisocyanate (index) | | 115 | 115 | 115 | 115 | 115 | 115 | 115 | 115 | 115 | 115 |
| Characteristic value | Density (kg/m³) | | 28.2 | 28.7 | 28.8 | 27.7 | 28.6 | 28.2 | 28.0 | 28.1 | 28.4 | 28.4 |
| | Cream time (seconds) | | 22 | 24 | 22 | 19 | 21 | 22 | 21 | 21 | 22 | 22 |
| | Rise time (seconds) | | 155 | 152 | 152 | 125 | 174 | 142 | 165 | 155 | 160 | 145 |
| | 25% hardness (N/314 cm²) | | 116 | 114 | 118 | 99 | 113 | 103 | 115 | 115 | 117 | 114 |
| | 40% hardness (N/314 cm²) | | 133 | 132 | 137 | 112 | 133 | 118 | 134 | 133 | 136 | 134 |
| | 65% hardness (N/314 cm²) | | 225 | 228 | 246 | 171 | 245 | 197 | 226 | 229 | 245 | 246 |
| | Compression set (%) | | 2.6 | 2.5 | 2.5 | 2.1 | 2.4 | 2.5 | 2.2 | 2.4 | 2.4 | 2.3 |
| | Wet heat compression set (%) | | 4.4 | 3.8 | 4.4 | 4.0 | 4.2 | 3.5 | 4.0 | 4.1 | 4.0 | 4.1 |
| | Air permeability (L/min) | | 53 | 52 | 61 | 76 | 47 | 67 | 55 | 52 | 54 | 50 |

| | | | | | | | | | | | | |
|---|---|---|---|---|---|---|---|---|---|---|---|---|
| E1 to E10 = Example 1 to Example 10 | | | | | | | | | | | | |

**[Table 2]**

| | | | CE1 | CE2 | CE3 | CE4 | CE5 | CE6 | CE7 | CE8 | CE9 |
|---|---|---|---|---|---|---|---|---|---|---|---|
| Composition | (Parts by mass) | (B1) Polyol | 100 | 100 | 100 | 100 | 100 | 100 | 100 | 100 | 100 |
| | | (B2) Water | 3.60 | 3.60 | 3.60 | 3.60 | 3.60 | 3.60 | 3.60 | 3.60 | 3.60 |
| | | Amine based blow catalyst | 0.08 | 0.08 | 0.08 | 0.08 | 0.08 | 0.08 | 0.08 | 0.08 | 0.08 |
| | | 2-ethylhexanoic acid tin catalyst | 0.10 | 0.10 | 0.13 | 0.10 | 0.07 | 0.12 | 0.13 | 0.12 | 0.13 |
| | | Silicone surfactant-1 | 0.90 | 0.90 | 0.90 | 0.90 | 0.90 | 0.90 | 0.90 | 0.90 | 0.90 |
| | | (C) Cross-linking agent-1 | | | | | | | | | |
| | | (C) Cross-linking agent-2 | | | | | | | | | |
| | | (C) Cross-linking agent-3 | | | | | | | | | |
| | | (C) Cross-linking agent-9 | | | | | | | | | |
| | | (C) Cross-linking agent-10 | | | | | | | | | |
| | | (C) Cross-linking agent-4 | | 1.00 | 3.00 | | | | | | |
| | | (C) Cross-linking agent-5 | | | | 1.00 | 3.00 | | | | |
| | | (C) Polar solvent-6 | | | | | | 1.00 | 3.00 | | |
| | | (C) Polar solvent-7 | | | | | | | | 1.00 | 3.00 |
| | (A) Polyisocyanate (index) | | 115 | 115 | 115 | 115 | 115 | 115 | 115 | 115 | 115 |
| Characteristic value | Density (kg/m³) | | 28.7 | 28.1 | 28.9 | 28.0 | 28.6 | 28.3 | 28.0 | 28.0 | 28.3 |
| | Cream time (seconds) | | 23 | 26 | 22 | 27 | 18 | 21 | 22 | 23 | 21 |
| | Rise time (seconds) | | 162 | 158 | 190 | 185 | 140 | 128 | 136 | 185 | 117 |
| | 25% hardness (N/314 cm²) | | 114 | 119 | 110 | 114 | 111 | 105 | 104 | 120 | 116 |
| | 40% hardness (N/314 cm²) | | 132 | 138 | 130 | 133 | 133 | 121 | 119 | 137 | 133 |
| | 65% hardness (N/314 cm²) | | 225 | 231 | 236 | 226 | 225 | 203 | 202 | 236 | 220 |
| | Compression set (%) | | 3.3 | 3.2 | 2.8 | 2.7 | 2.7 | 2.7 | 2.6 | 2.9 | 2.7 |
| | Wet heat compression set (%) | | 5.6 | 5.2 | 4.5 | 5.0 | 4.9 | 6.1 | 5.4 | 4.9 | 4.6 |
| | Air permeability (L/min) | | 54 | 58 | 59 | 46 | 58 | 54 | 59 | 53 | 33 |

| | | | | | | | | | | | |
|---|---|---|---|---|---|---|---|---|---|---|---|
| CE1 to CE9 = Comparative Example 1 to Comparative Example 9 | | | | | | | | | | | |

### Examples 11 to 16, Comparative examples 10 to 13

(A) polyisocyanate, (B1) polyol, (B2) water, cross-linking agent-1 to cross-linking agent-2, cross-linking agent-4, polar solvent-6, and polar solvent-7 which are the (C) component, the catalyst and the surfactant were compounded by the compositions (parts by mass) presented in Table 3 and Table 4 and mixed by a high-speed mixer. Adeka Polyol G-3000B (glycerin-propylene oxide adduct, hydroxyl group value 54 mgKOH/g; manufactured by Adeka Corporation) was used as (B1) polyol, NIAX silicone L-598 (silicone based surfactant: manufactured by Momentive Performance Materials Japan LLC) was used as the surfactant, and the above-stated ones were used as (A) polyisocyanate, amine based blow catalyst, 2-ethylhexanoic acid tin catalyst (gelling catalyst), and cross-linking agent-1, cross-linking agent-2, cross-linking agent-4, polar solvent-6, and polar solvent-7.

After mixing, the obtained foam composition was poured immediately into a wooden mold (internal dimensions 200 x 200 x 200 mm) in which a release paper is laid, and then the cream time (seconds) and the rise time (seconds) were measured similarly to Examples 1 to 10.

The composition poured into the wooden mold was foamed and molded by retaining as it is for three minutes at room temperature (23°C ± 2°C). Thereafter, the foam was taken out together with the release paper from the wooden mold, cross-linked by heating for ten minutes in an oven at 120°C, and thereafter cooled to the room temperature.

Next, the thus obtained polyurethane foam was cut out by 10 cm x 10 cm x 10 cm, and thereafter density (kg/m³) thereof was measured. Further, the compression set (%), the wet heat compression set (%) and the air permeability (L/min.) of the obtained polyurethane foam were measured similarly as described above. Measurement results are presented in the lower fields of Table 3 and Table 4.

**[Table 3]**

| | | | E11 | E12 | E13 | E14 | E15 | E16 |
|---|---|---|---|---|---|---|---|---|
| Composition | (Parts by mass) | (B1) Polyol | 100 | 100 | 100 | 100 | 100 | 100 |
| | | (B2) Water | 2.20 | 2.20 | 2.20 | 2.20 | 2.20 | 2.20 |
| | | Amine based blow catalyst | 0.08 | 0.08 | 0.08 | 0.08 | 0.08 | 0.08 |
| | | 2-ethylhexanoic acid tin catalyst | 0.20 | 0.20 | 0.20 | 0.20 | 0.20 | 0.20 |
| | | Silicone surfactant-2 | 1.00 | 1.00 | 1.00 | 1.00 | 1.00 | 1.00 |
| | | (C) Cross-linking agent-1 | 2.50 | 5.00 | | | | |
| | | (C) Cross-linking agent-2 | | | 2.50 | 5.00 | | |
| | | (C) Cross-linking agent-9 | | | | | 2.50 | 5.00 |
| | | (C) Cross-linking agent-4 | | | | | | |
| | | (C) Polar solvent-6 | | | | | | |
| | | (C) Polar solvent-7 | | | | | | |
| | (A) Polyisocyanate (index) | | 105 | 105 | 105 | 105 | 105 | 105 |
| Characteristic value | Density (kg/m³) | | 40.9 | 39.5 | 39.4 | 40.2 | 40.3 | 40.4 |
| | Cream time (seconds) | | 19 | 21 | 20 | 23 | 22 | 22 |
| | Rise time (seconds) | | 134 | 140 | 140 | 140 | 141 | 142 |
| | Compression set (%) | | 3.1 | 3.0 | 2.9 | 3.2 | 3.0 | 3.0 |
| | Wet heat compression set (%) | | 7.6 | 8.1 | 8.4 | 9.1 | 7.8 | 8.0 |
| | Air permeability (L/min) | | 81 | 95 | 99 | 94 | 80 | 78 |

| | | | | | | | | |
|---|---|---|---|---|---|---|---|---|
| C11 to E16 = Example 11 to Example 16 | | | | | | | | |

**[Table 4]**

| | | | CE10 | CE11 | CE12 | CE13 |
|---|---|---|---|---|---|---|
| Composition | (Parts by mass) | (B1) Polyol | 100 | 100 | 100 | 100 |
| | | (B2) Water | 2.20 | 2.20 | 2.20 | 2.20 |
| | | Amine based blow catalyst | 0.08 | 0.08 | 0.08 | 0.08 |
| | | 2-ethylhexanoic acid tin catalyst | 0.20 | 0.20 | 0.20 | 0.20 |
| | | Silicone surfactant-2 | 1.00 | 1.00 | 1.00 | 1.00 |
| | | (C) Cross-linking agent-1 | | | | |
| | | (C) Cross-linking agent-2 | | | | |
| | | (C) Cross-linking agent-9 | | | | |
| | | (C) Cross-linking agent-4 | | 5.00 | | |
| | | (C) Polar solvent-6 | | | 3.00 | |
| | | (C) Polar solvent-7 | | | | 3.00 |
| | (A) Polyisocyanate (index) | | 105 | 105 | 105 | 105 |
| Characteristic value | Density (kg/m³) | | 40.9 | 40.7 | 40.5 | 40.4 |
| | Cream time (seconds) | | 17 | 18 | 24 | 23 |
| | Rise time (seconds) | | 134 | 132 | 137 | 141 |
| | Compression set (%) | | 3.6 | 3.2 | 3.3 | 3.1 |
| | Wet heat compression set (%) | | 15.9 | 12.0 | 10.2 | 10.0 |
| | Air permeability (L/min) | | 61 | 82 | 85 | 90 |

| | | | | | | |
|---|---|---|---|---|---|---|
| CE10 to CE13 = Comparative Example 10 to Comparative 13 | | | | | | |

### Examples 17 to 19, Comparative examples 14 to 16

(A) polyisocyanate, (B1) polyol, (B2) water, cross-linking agent-1, polar solvent-6, and cross-linking agent-8 which are the (C) component, the catalyst and the surfactant were compounded by the compositions (parts by mass) presented in Table 5, mixed by a high-speed mixer, and thereafter immediately poured into an aluminum mold (internal dimensions 300 x 300 x 100 mm) whose temperature is controlled at 60 ± 2°C, the lid of the mold was closed, and it was foamed and molded by retaining as it is for five minutes, thereby obtaining a polyurethane foam. At this time, a discharge time was measured as described below.

### [Discharge time]

A time (seconds) from the addition of (A) polyisocyanate into the reaction mixture until the foam is pushed out and first appears through four gas vent holes at an upper part of the mold was measured as a discharge time.

Note that CORONATE 1021 (blended isocyanate composed of TDI of 80 mass% and MDI of 20 mass%: manufactured by Nippon Polyurethane Industries Co., LTD) was used as (A) polyisocyanate. Further, the above-stated ones were used as a surfactant, cross-linking agent-1 and polar solvent-6. A cross-linking agent composition made by mixing polyoxyethylene glyceryl ether (Mw = 990) (UCON TPEG-990: manufactured by Dow Chemical Company) and dimethyl sulfoxide (manufactured by Wako Pure Chemical Industries, Ltd.) with a mass ratio of 20/80 was used as cross-linking agent-8.

Moreover, Sannix FA-703 (glycerin-propylene oxide/ethylene oxide adduct, hydroxyl group value 34 mgKOH/g; manufactured by Sanyo Chemical Industries, Ltd.) was used as (B1) polyether polyol, Sannix FA-728R (hydroxyl group value 34 mgKOH/g; manufactured by Sanyo Chemical Industries, Ltd.) was used as (B1) polymer polyol, and Niax catalyst A-1 (amine based blow catalyst: manufactured by Momentive Performance Materials Japan LLC) and Niax catalyst A-33 (amine based gelling catalyst: manufactured by Momentive Performance Materials Japan LLC) were used as the catalyst.

Further, the density (kg/m³) of the obtained polyurethane foam was measured. The density was measured as overall density of the foam as it is after taken out of the mold.

Moreover, the characteristics of the obtained polyurethane foam were measured as described below in accordance with JIS K 6401.

### [Force-to-crush: FTC]

FTC was measured from when one minute has passed after the foam is taken out of the mold, and is a peak force needed for compressing the foam (foam pad) from an initial thickness to 50%. It was measured by using a load tester of which settings were the same as the one used for the hardness measurement. The FTC value (N) is a good measure for evaluating interconnectability of foams. The lower the FTC value, the higher the interconnectability of foams.

### [Hardness]

After it was taken out of the mold and let stand still for one day at room temperature, the hardness (N) of the same pad used for the FTC measurement was measured in accordance with the measurement of hardness of JIS K6401.

### [Feeling test]

A foam surface after it is let stand for one day at room temperature was touched by bare hands to evaluate feeling. Stickiness and slipperiness were evaluated by three levels.

Measurement results of the characteristics of these foams are presented in the lower field of Table 5 together with measurement results of the density and discharge time of the foam compositions. Note that in the feeling test results in Table 5, X indicates good, Y indicates moderately good, and Z indicates no good for both the stickiness and slipperiness.

**[Table 5]**

| | | | E17 | E18 | E19 | CE14 | CE15 | CE16 |
|---|---|---|---|---|---|---|---|---|
| Composition | (Parts by mass) | (B1) Polyether polyol | 75 | 75 | 75 | 75 | 75 | 75 |
| | | (B1) Polymer polyol | 25 | 25 | 25 | 25 | 25 | 25 |
| | | (B2) Water | 5.30 | 3.20 | 3.20 | 5.30 | 5.30 | 3.20 |
| | | Amine based gelling catalyst | 0.60 | 0.40 | 0.40 | 0.60 | 0.60 | 0.40 |
| | | Amine based blow catalyst | 0.08 | 0.10 | 0.10 | 0.08 | 0.08 | 0.10 |
| | | Silicone surfactant-3 | 2.00 | 1.00 | 1.00 | 2.00 | 2.00 | 1.00 |
| | | (C) Cross-linking agent-1 | 5.00 | 5.00 | | | | |
| | | (C) Polar solvent-6 | | | | | 5.00 | |
| | | (C) Cross-linking agent-8 | | | 5.00 | | | |
| | (A) Polyisocyanate (index) | | 95 | 95 | 95 | 95 | 95 | 95 |
| Characteristic value | Density (kg/m³) | | 31.6 | 61.0 | 60.4 | 31.2 | 31.6 | 60.6 |
| | Discharge time (seconds) | | 42 | 37 | 31 | 40 | 41 | 36 |
| | FTC at 50% (N) | | 506 | 573 | 515 | 439 | 679 | 557 |
| | Hardness at 25% (N/314 cm²) | | 85 | 159 | 136 | 106 | 92 | 184 |
| | Compression set (%) | | 8.7 | 7.2 | 8.0 | 9.3 | 10.6 | 8.5 |
| | Wet heat compression set (%) | | 29.2 | 17.6 | 11.4 | 32.8 | 34.4 | 22.9 |
| | Feeling test, stickiness | | Y | X | X | Z | Y | Z |
| | Feeling test, slipperiness | | Y | Y | X | Z | Y | Z |

| | | | | | | | | |
|---|---|---|---|---|---|---|---|---|
| E17 to E19 = Example 17 to Example 19; CE 14 to CE 16 = Comparative Example 14 to Comparative Example 16 | | | | | | | | |

As can be seen from the measurement results of Table 1 to Table 5, the polyurethane foams of Examples 1 to 19 obtained by using the cross-linking agent-1 to cross-linking agent-3 and the cross-linking agent-8 to cross-linking agent-10, in which at least one kind of the (C1) cross-linking agent selected from the (CA) ethoxylate derivative having a mass average molecular weight of 2000 or less and the (CB) ester compound having a mass average molecular weight of 2500 or less, and the (C2) non-protic polar solvent are compounded so that the mass ratio ((a + b)/c) of the sum of the content a of the (CA) ethoxylate derivative and the content b of the (CB) ester compound relative to the content c of the (C2) non-protic polar solvent comes within the range of 1/10 to 10/1, are largely improved in wet set as compared to the polyurethane foams of Comparative example 1, Comparative example 14 and Comparative example 16 obtained without compounding a cross-linking agent and the polyurethane foams of Comparative examples 2 to 13 and Comparative example 15 obtained by using the cross-linking agent-4 to cross-linking agent-5, the polar solvent-6 and the polar solvent-7.

Further, the polyurethane foams of Example 17 to 19 obtained by mold foaming the foam composition in which the cross-linking agent-1 or cross-linking agent-8 is compounded exhibit good feeling for both stickiness and slipperiness in the feeling test.

The polyurethane foams of Comparative example 14 and Comparative example 16 obtained without compounding a cross-linking agent are no good for both stickiness and slipperiness in the feeling test. In particular, the polyurethane foam of Comparative example 14 also exhibits bad compression set characteristic. Moreover, the polyurethane foam of Comparative example 15 in which the polar solvent-6 constituted only of the (C2) non-protic polar solvent is compounded has a feeling test result that is not so bad, but exhibits bad compression set characteristic.

### Industrial Applicability

According to the expandable polyurethane composition of the present invention, a flexible polyurethane foam can be obtained with good manufacturing efficiency of which compression set, particularly wet set, is largely improved and feeling such as stickiness and slipperiness is good. The obtained flexible polyurethane foam is preferred for vehicle seats, furniture cushions, bedding mattresses, and the like as a high-resilience polyurethane foam.

## Claims

1. An expandable polyurethane composition, comprising:
(A) polyisocyanate;
(B) active hydrogen containing compound including (B1) polyol and (B2) water;
a catalyst; and
(C) cross-linking agent composition of 0.1 to 20 parts by mass relative to 100 parts by mass of the (B1) polyol,
wherein the (C) cross-linking agent composition comprises at least one kind of (C1) cross-linking agent selected from (CA) ethoxylate derivative and (CB) ester compound, and (C2) non-protic polar solvent,
the (CA) ethoxylate derivative having a mass average molecular weight of 2000 or less represented by
formula (1): HO(CH₂CH₂O)ₘH (in the formula (1), m is an integer of 3 to 30)
or
formula (2): R¹-[(CH₂CH₂O)ₙH]ₓ
(in the formula (2), R¹ represents a group selected from a glycerol group, a trimethylol group, a pentaerythritol group, and a diglycerol group, n is an integer of 1 to 15, and x is 3 or 4); and
the (CB) ester compound having a mass average molecular weight of 2500 or less represented by
formula (3): H(OR²OCOR³CO)_{y}-OR²
or
formula (4): R⁴-[(OCOR³CO-OR²)_{y}-OH]₃
(in the formula (3) and formula (4), R² represents an alkyl group of which carbon number is 2 to 10, R³ represents an alkyl group of which carbon number is 1 to 15, and y is an integer of 1 to 14, and in the formula (4), R⁴ represents an alkyl group of which carbon number is 1 to 15), and
wherein, in the (C) cross-linking agent composition, a mass ratio ((a + b)/c) of a sum of content (a) of the (CA) ethoxylate derivative and content (b) of the (CB) ester compound relative to content (c) of the (C2) non-protic polar solvent is 1/10 to 10/1.

2. The expandable polyurethane composition according to claim 1,
wherein the (C2) non-protic polar solvent comprises one kind or a mixture of two or more kinds selected from dialkyl sulfoxide, N,N-dialkyl alkanoamide, 1-methyl-2-pyrrolidone, organic carbonate, and cyclic ester.

3. The expandable polyurethane composition according to claim 2,
wherein the dialkyl sulfoxide comprises one kind or a mixture of two or more kinds selected from dimethyl sulfoxide, diethyl sulfoxide, and diisobutyl sulfoxide.

4. The expandable polyurethane composition according to claim 2,
wherein the N,N-dialkyl alkanoamide comprises one kind or a mixture of two or more kinds selected from N,N-dimethylformamide, N,N-dimethylacetamide, and N,N-diethylacetamide.

5. The expandable polyurethane composition according to claim 2,
wherein the organic carbonate comprises one kind or a mixture of two or more kinds selected from dimethyl carbonate, ethylene carbonate, and propylene carbonate.

6. The expandable polyurethane composition according to claim 2,
wherein the cyclic ester comprises one kind or a mixture of two or more kinds selected from γ-butyrolactone, ε-caprolactone, and γ-valerolactone.

7. The expandable polyurethane composition according to any one of claims 1 to 6, wherein the (CA) ethoxylate derivative has a mass average molecular weight of 1200 or less.

8. The expandable polyurethane composition according to any one of claims 1 to 7, wherein the (CA) ethoxylate derivative is a compound in which R¹ is a glycerol group and x is 3 in the formula (2): R¹-[(CH₂CH₂O)ₙH]ₓ.

9. The expandable polyurethane composition according to any one of claims 1 to 8, wherein the (CB) ester compound has a mass average molecular weight of 1200 or less.

10. The expandable polyurethane composition according to any one of claims 1 to 8,
wherein the (CB) ester compound is 3-methyl-1,5-pentanediol adipate represented by formula: H-[O(CH₂CH₂CH(CH₃)CH₂CH₂-O-CO-CH₂CH₂CH₂CH₂CO)]_{y}-O-CH₂CH₂CH(CH₃)CH₂CH₂-OH (in the formula, y is an integer of 1 to 14) or
formula: R⁴-[(OCOCH₂CH₂CH₂CH₂CO-OCH₂CH₂CH(CH₃)CH₂CH₂)_{y}-OH]₃ (in the formula, R⁴ represents an alkyl group of which carbon number is 1 to 15, and y is an integer of 1 to 9).

11. The expandable polyurethane composition according to any one of claims 1 to 10,
wherein the (A) polyisocyanate comprises 2,4-tolylene diisocyanate and/or 2,6-tolylene diisocyanate, of which content rate to the (A) polyisocyanate is 10 mass% or more.

12. The expandable polyurethane composition according to any one of claims 1 to 11,
wherein a foam obtained from the expandable polyurethane composition has density of 14 kg/m³ or more and 80 kg/m³ or less.

13. A manufacturing method of a flexible polyurethane foam, comprising using the expandable polyurethane composition according to any one of claims 1 to 12.
